# EUROPEAN PATENT APPLICATION

(11) **EP 2 160 029 A1**
(43) Date of publication of application: **03.03.2010**
(21) Application number: 08305498.1
(22) Date of filing: 25.08.2008
(51) Int. Cl.: H04N 7/16

(54) **Method for migrating a video session between a fixed multimedia device and a mobile multimedia device**

(71) Applicant: Alcatel Lucent, 75008 Paris (FR)
(72) Inventor: Maisonneuve, Julien, 75002, PARIS (FR)
(74) Representative: Sciaux, Edmond

(57) **Abstract**

The invention relates to a method for migrating a video session between a migrating device (12, 14), wherefrom a migration is operated, and a migrated device (12, 14), whereto the migration operates, both the migrating and the migrated devices (12, 14) communicating within their respective networks (18, 24) on the basis of specific telecommunication protocols, **characterized in that** it comprises the steps of:
- defining video parameters which identify a video content displayed in the migrating device (12, 14),
- transferring such video parameters from the network (18, 24) of the migrating device (12, 14) to the network (18, 24) of the migrated device (12, 14) in a session transfer message (22, 36, 38) transmitted through at least one server (17, 19, 30) which adapts the video parameters from a migrating device protocol to a migrated device protocol,
- displaying the video content in the migrated device (12, 14) using the video parameters transferred to the migrated device network (18, 24) so that the video content is displayed in both the migrating device (12, 14) and the migrated device (12,14).

## Description

An increasing number of users access video content alternatively through a mobile device or through a fixed device. For instance, a multimedia mobile telephone could alternatively be used with a fixed TV set to display a video content.

Indeed, it might be underlined that a mobile device uses specific mobile telecommunication protocols, for instance GPRS or 3G, which are different from the protocols considered for fixed device uses, such as for instance the Internet protocol (IP).

While a mobile device allows accessing video on the move, for instance on a public transport, its displaying qualities are generally limited by the dimensions of its display.

Therefore, a user who started a video session on a mobile device may appreciate to be able to continue such session on a more comfortable fixed device which may be allowable, for instance, at home.

Similarly, a user who started a video session on a fixed device may appreciate to be able to continue such session on a mobile device when having to leave the location nearby the fixed device.

In order for a user to migrate a session from a fixed device to a mobile device or vice versa, different methods are already known:
- A first method is called hereafter "SILO method", In this case, both the fixed and the mobile devices are part of an integrated network wherein direct communications between the mobile and the fixed device are commonly standardized.

In other words, the mobile device and the fixed device use the same protocols relating, for instance, to communication and control.

The SILO method presents the disadvantage that, by definition, it does not allow to external devices the opportunity to transfer or migrate sessions with the internal devices thereof.
- A second method is called thereafter "IMS method", for Internet Multimedia Subsystem (IMS) method which is an open standardized architecture that defines operations to have Internet Protocol (IP) networks handling voice calls and data sessions.

In this case, IMS standard applies as a common element to different IP networks so that multimedia sessions and migrations between IMS users, between IMS users and IP users or between IP users will be based on the same protocols.

Although telecommunications operators have announced IMS trials, there is no full-scale deployment of IMS networks. And even considering such a future development, IMS network would not allow already existing devices to deliver a content migration service based on a protocol - IMS - they are not prepared for.

The present invention aims to solve at least one of the problems hereinabove underlined i.e. to deliver a video content migration method which allows migration between fixed and mobile devices operating through different telecommunication networks, and to implement a migration method which can be used with already existing devices.

For that purpose, the invention relates to a method for migrating a video session between a migrating device, wherefrom a migration is operated, and a migrated device, whereto the migration operates, both the migrating and the migrated devices communicating within their respective networks on the basis of specific telecommunication protocols, characterized in that it comprises the steps of:
- defining video parameters which identify a video content displayed in the migrating device,
- transferring such video parameters from the network of the migrating device to the network of the migrated device in a session transfer message transmitted through at least one server which adapts the video parameters from a migrating device protocol to a migrated device protocol,
- displaying the video content in the migrated device using the video parameters transferred to the migrated device network so that the video content is displayed in both the migrating device and the migrated device.

A method according to the invention allows the migration of a video content between already existing mobile devices and fixed devices. Indeed, such migration is performed by at least one server which identifies video parameters, transmitted in accordance with one protocol, and sends such video parameters to the migrating device according to another protocol.

Also, the method allows operating a transformation of the video parameters in order to allow their transfer between different telecommunication networks despite the fact that these networks may use different communication protocols.

In one embodiment, the migration is operated between a fixed multimedia device and a mobile multimedia device.

In one embodiment, the fixed multimedia device is a television set receiving video programs based on the Internet Protocol.

In one embodiment, the method comprises the step of sending a requirement of migration to the migrating device.

In one embodiment, the session transfer message is transmitted from a migrating service platform, which is a server of the migrating device network, towards a migrated service platform, which is a server of the migrated device network.

In one embodiment, the transmission of the session transfer message is based on the Internet Protocol.

In one embodiment, the video parameters comprise at least an identification of the video content displayed in the migrating device and/or an identification of a broadcasting channel wherefrom the video content is transmitted to the migrating device.

In one embodiment, applets are associated to the migrating device and to the migrated device so that a session transfer message of migration is treated by one server which transforms video parameters contained in the session transfer message from the migrating device protocol to the migrated device protocol.

The invention also relates to a server for migrating a video session between a migrating device, wherefrom a migration is operated, and a migrated device, whereto the migration operates, both the migrating and the migrated devices communicating through their respective networks based on specific telecommunication protocols, characterized in that it comprises means for:
- receiving video parameters, which identify a video content displayed in the migrating device.
- adapting the video parameters from a protocol of the migrating device network to a protocol of the migrated device network,
- transferring such video parameters, based on the migrated device protocol, to the migrated device network so that the video content is displayed in both the migrating device and the migrated device.

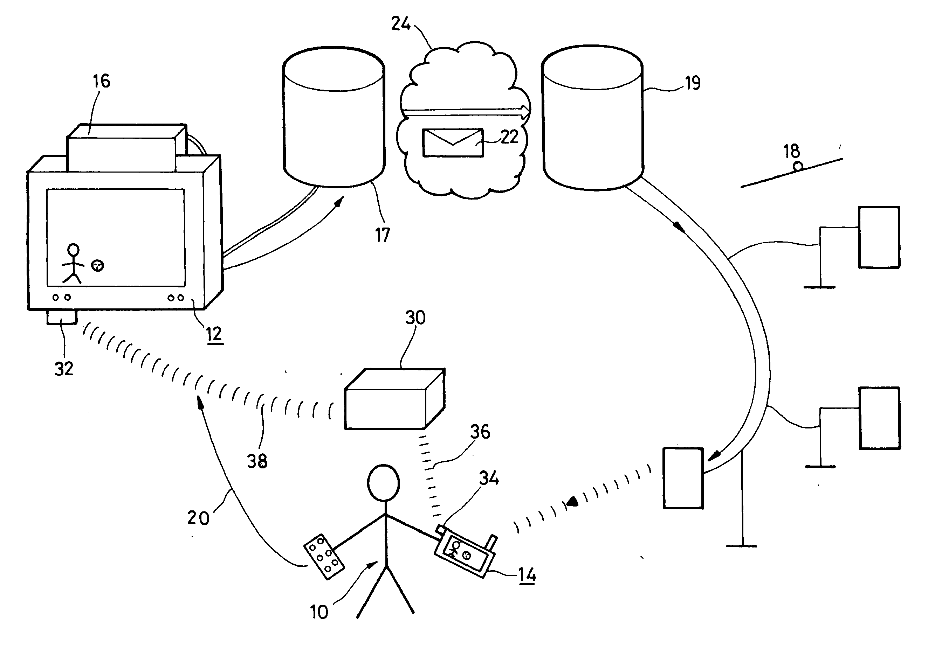

The foregoing aspects and many of the attendant advantages of this invention will become more readily appreciated as the same becomes better understood by reference to the following detailed description when taking in conjunction with the accompanying drawing which is a pictorial depiction of two possible embodiments of the invention.

More precisely, a user 10 is represented when migrating a video session from a fixed multimedia device 12 towards a mobile multimedia device 14,

For instance, the fixed multimedia device is a TV screen which receives TV programs from a service platform 17 which can broadcast TV programs through the Internet 24, which is the telecommunication network of the fixed device. For that purpose, the TV screen comprises a settopbox 16 which treats Internet Protocol (IP) signals.

The mobile multimedia devices 14 might be, in this embodiment, a Personal Digital Assistant or "PDA". It uses a mobile telecommunication network 18, comprising a server 19, based on a specific mobile telecommunication protocol such as GPRS or 3G.

According to the invention, the user 10 can operate a migration of the video session by requiring such migration on the device which displays such video session i.e. the fixed TV 12 screen on this example.

Following the requirement 20, a session transfer message 22 is sent from the service platform 17 to the service platform 19 of the mobile network 18.

For that purpose, it might be underlined that a standard communication must be established between the service platforms 17 and 19, for instance through the Internet 24.

The session transfer message 22 contents video parameters which identify the video content displayed in the fixed device 12. For instance, the identification of video content or the identification of a broadcasting channel could be part of the video parameters.

Thereby service platforms 17 and 19 have operated a transfer of the video parameters from the displaying device 12 to the network 18 of the migrated device 14 while adapting the video parameters to the migrated device protocol.

As a consequence, user 10 can access the video content in the migrated mobile device 14 since the required video parameters have been communicated to the server 19 in accordance with the mobile device network 18 protocol.

Thereafter, the server 19 can broadcast the required video session to the mobile device 14 which initiates a TV session displaying the content identified in the service transfer message 22.

According to a second embodiment of the invention, a single server 30 is used in conjunction with specific applets 32 and 34 relating respectively to the TV set 12 and to the mobile phone 14.

With these applets 32 and 34, the user 10 can operate a migration of the video session by requiring such migration from the devices. For that purpose, a requirement 36 of migration is treated directly by a server 30 which can treat such requirement 36 as a session transfer message containing video parameters according to the network 18 of the mobile 14 protocol in order to transform it in a session transfer message 38 containing the same video parameters according to the network 24 of the fixed device 12 protocol.

Thereby, this embodiment of the invention does not require message transfers between different networks.

While preferred embodiments of the invention have been disclosed in considerable detail, many variations and changes in the method described can be operated without departing from the spirit or scope of the invention.

Indeed, the invention can operate a migration across different IP television systems or sets. For example, a user may use the invention to migrate a video session on different TV sets such as its own TV set and/or the neighbor's TV set.

In other examples, the invention allows a user to migrate a video session through several IP based television devices, for instance within a house, or between different mobile television systems or devices.

## Claims

1. Method for migrating a video session between a migrating device (12, 14), wherefrom a migration is operand, and a migrated device (12, 14), whereto the migration operates, both the migrating and the migrated devices (12, 14) communicating within their respective networks (18, 24) on the basis of specific telecommunication protocols, **characterized in that** it comprises the steps of:
- defining video parameters which identify a video content displayed in the migrating device (12, 14),
- transferring such video parameters from the network (18, 24) of the migrating device (12, 14) to the network (18, 24) of the migrated device (12, 14) in a session transfer message (22, 36, 38) transmitted through at least one server (17. 19. 30) which adapts the video parameters from a migrating device protocol to a migrated device protocol,
- displaying the video content in the migrated device (12, 14) using the video parameters transferred to the migrated device network (18, 24) so that the video content is displayed in both the migrating device (12, 14) and the migrated device (12, 14).

2. Method according to claim 1 **characterized in that** the migration is operated between a fixed multimedia device (12) and a mobile multimedia device (14).

3. Method according to claim 2 **characterized in that** the fixed multimedia device (12) is a television set receiving video programs based on the Internet Protocol (IP).

4. Method according to any of the previous claims **characterized in that** it comprises the step of sending a requirement (20) of migration to the migrating device (12).

5. Method according to any of the previous claims **characterized in that** the transmission of the session transfer message (22) is based on the Internet Protocol.

6. Method according to any of the previous claims **characterized in that** the session transfer message (22) is transmitted from a migrating service platform (17), which is a sever of the migrating device (12) network (24), towards a migrated service platform (19), which is a server of the migrated device (14) network (18).

7. Method according to any of the previous claims **characterized in that** the video parameters comprise at least an identification of the video content displayed in the migrating device (12, 14) or an identification of a broadcasting channel wherefrom the video content is transmitted to the migrating device (12, 14).

8. Method according to any of the previous claims **characterized in that** applets (32, 34) are associated to the migrating device (14) and to the migrated device (12) so that the session transfer message (36) of migration is treated by one server (30) which transforms video parameters contained in the session transfer message (36) from the migrating device (14) protocol to the migrated device (12) protocol.

9. Server (30) for migrating a video session between a migrating device (14), wherefrom a migration is operated, and a migrated device (12), whereto the migration operates, both the migrating and the migrated devices (12, 14) communicating through their respective networks (18, 24) based on specific telecommunication protocols, **characterized in that** it comprises means for:
- receiving video parameters, which identify a video content displayed in the migrating device (14),
- adapting the video parameters from a protocol of the migrating device network (18) to a protocol of the migrated device network (24),
- transferring such video parameters, based on the migrated device protocol, to the migrated device (12) network (24) so that the video content is displayed in both the migrating device (14) and the migrated device (12).
